# EUROPÄISCHE PATENTANMELDUNG

(11) **EP 1 768 444 A2**
(43) Veröffentlichungstag der Anmeldung: **28.03.2007**
(21) Anmeldenummer: 06019414.9
(22) Anmeldetag: 15.09.2006
(51) Int. Cl.: H04Q 9/00

(54) **Verfahren zum Überwachen von Vorgängen auf einer Tankstelle**

(30) Priorität: 26.09.2005 DE 102005045974
(71) Anmelder: FAFNIR GmbH, 22765 Hamburg (DE)
(72) Erfinder: Schrittenlacher, Wolfgang, 21075 Hamburg (DE); Kunter, Stefan, 22337 Hamburg (DE)
(74) Vertreter: UEXKÜLL & STOLBERG

(57) **Zusammenfassung**

Bei einem Verfahren zum Überwachen von Vorgängen auf einer Tankstelle werden mittels einer Anzahl von Messeinrichtungen Daten aufgenommen. Die Daten werden gesammelt und in ihrem zeitlichen Verlauf ausgewertet, vorzugsweise in einem Kassenrechner oder einem Backoffice-Rechner der Tankstelle. Auf diese Weise lassen sich z.B. eine Autokalibrierung der Füllstand-Messeinrichtung eines Lagertanks durchführen, Messabweichungen von Kraftstoffvolumen-Messeinrichtungen in den Zapfsäulen ermitteln oder Rückschlüsse auf den Zustand von Kraftstofffiltern ziehen.

## Beschreibung

Die Erfindung betrifft ein Verfahren zum Überwachen von Vorgängen auf einer Tankstelle.

Auf einer Tankstelle befinden sich im Allgemeinen zahlreiche Systeme, bei denen mit Messeinrichtungen Daten aufgenommen werden. Derartige Daten können z.B. zur Anzeige gebracht oder zum Steuern von Prozessen verwendet werden. So wird z.B. an einer Zapfsäule das bei einem Betankungsvorgang geförderte Kraftstoffvolumen angezeigt und außerdem zu einem Kassenrechner und gegebenenfalls zu einem Backoffice-Rechner weitergeleitet, wo die verkauften Kraftstoffmengen registriert werden können. Ein anderes Beispiel ist die Überwachung der Gasrückführung durch Vergleich der bei Betankungsvorgängen geförderten Kraftstoffmenge pro Zeiteinheit mit dem aus dem Kraftfahrzeug abgepumpten Gasvolumenstrom, wobei ein Alarm ausgelöst wird, wenn vorgegebene Abweichungsgrenzen überschritten werden. Aus der DE 10 2004 009 643 A1 ist ein Lüftungsmast-Überwachungssystem bekannt, bei dem mit Messeinrichtungen das Ausströmen oder Einströmen von Gas bzw. Luft bei einem Lüftungsmast eines Erdtanks erfasst wird. Dies sind einige Beispiele; daneben gibt es zahlreiche weitere Systeme.

All diese Systeme sind in der Regel Einzelsysteme, die zwar ihre Funktion erfüllen, aber getrennt voneinander arbeiten, so dass es insgesamt nicht einfach ist, einen Überblick über die auf einer Tankstelle ablaufenden Vorgänge zu behalten.

Es ist Aufgabe der Erfindung, eine Möglichkeit zu schaffen, die Messeinrichtungen einer Tankstelle effizienter zu nutzen, um den Tankstellenbetrieb zu erleichtern.

Diese Aufgabe wird gelöst durch ein Verfahren zum Überwachen von Vorgängen auf einer Tankstelle mit den Merkmalen des Anspruchs 1. Vorteilhafte Ausgestaltungen der Erfindung ergeben sich aus den Unteransprüchen. Der Anspruch 15 betrifft eine Vorrichtung zur Durchführung des Verfahrens.

Bei dem erfindungsgemäßen Verfahren zum Überwachen von Vorgängen auf einer Tankstelle werden mittels einer Anzahl von Messeinrichtungen Daten aufgenommen, und die Daten werden gesammelt und in ihrem zeitlichen Verlauf ausgewertet.

Bei einer bevorzugten Ausführungsform des Verfahrens ist zumindest ein Teil der Messeinrichtungen mit einem zentralen Rechner vernetzt, wobei zumindest ein Teil der Auswertung in diesem Rechner durchgeführt wird, z.B. einem Kassenrechner und/oder einem Backoffice-Rechner der Tankstelle. Derartige Rechner sind auf einer üblichen Tankstelle vorhanden und haben in der Regel eine mehr als ausreichende Rechen- und Speicherkapazität.

Eine Möglichkeit besteht darin, die Daten bei der Auswertung darzustellen. Das heißt, der zeitliche Verlauf der von den jeweiligen Messeinrichtungen erfassten Messwerte bzw. der diesen entsprechenden Daten wird protokolliert und kann bei Bedarf z.B als Liste ausgedruckt oder in einem Diagramm dargestellt werden. Ferner kann eine Fehlermeldung erzeugt werden, z.B. als Alarm, wenn bei der Auswertung dargestellte Daten außerhalb eines vorgegeben Bereichs liegen oder aus einem vorgegebenen Bereich herauslaufen.

Bei dem erfindungsgemäßen Verfahren können auch Daten bei der Auswertung miteinander verknüpft werden.

Durch die Auswertung der von vorhandenen Messeinrichtungen erhaltenen Messwerte und der daraus gewonnenen Daten in ihrem zeitlichen Verlauf ermöglicht es die Erfindung, Vorgänge auf einer Tankstelle besser zu überblicken und Trends zu erkennen, die eine Handlung erforderlich machen. Die Erfindung eröffnet die Möglichkeit, Daten zusammenzuführen und zu nutzen, die bei den herkömmlichen Einzelsystemen voneinander isoliert sind. Da zur Durchführung des erfindungsgemäßen Verfahrens in der Regel die auf einer Tankstelle bereits vorhandenen Messeinrichtungen und Rechneranlagen genutzt werden können, sind die Investionskosten vergleichsweise gering.

Beispiele für bei der Durchführung des Verfahrens verwendete Daten sind Kraftstofflagerungs-Daten (z.B. Füllstände in Vorrats- oder Lagertanks der Tankstelle oder Signaldaten, die von Tankfahrzeugen beim Auffüllen der Lagertanks abgegeben werden), Kraftstoffumschlags-Daten (z.B. die bei den einzelnen Betankungsvorgängen an den Zapfsäulen abgegebenen Kraftstoffmengen) oder Umwelt-Daten (z.B. aus der Überwachung der Gasrückführung, der Lüftungsmaste oder der Ölabscheider). Dies wird weiter unten anhand von Beispielen ausführlich erläutert.

Als Messeinrichtungen, die bei der Durchführung des erfindungsgemäßen Verfahrens verwendet werden können, kommen zahlreiche Messeinrichtungen in Frage. Dazu gehören die Messeinrichtungen, die den Kraftstoff-Lagertanks zugeordnet sind, insbesondere Füllstand-Messeinrichtungen, Abfüllsicherungs-Sensoren, Wasserstands-Sensoren, Drucksensoren, Domschacht-Sensoren, Kraftstoffart-Sensoren, Leck-Sensoren sowie Kraftstoffleitungs-Sensoren. Als Messeinrichtungen, die Lüftungsmasten zugeordnet sind, sind insbesondere die Messeinrichtungen zu nennen, die Strömungsvorgänge an einem Lüftungsmast erfassen. Messeinrichtungen an Zapfsäulen oder funktionell den Zapfsäulen zugeordnete Einrichtungen sind z.B. Kraftstoffvolumen-Messeinrichtungen, um das bei einem Betankungsvorgang abgegebene Kraftstoffvolumen zu erfassen (wobei aber auch ein Zeitsignal mit ausgenutzt werden kann), Gasdurchfluss-Messeinrichtungen von üblichen Gasrückführungs-Überwachungssystemen sowie Gaskonzentrations-Messeinrichtungen bei fortgeschrittenen Gasrückführungs-Überwachungssystemen. Ferner fallen Ölabscheider-Sensoren unter die betreffenden Messeinrichtungen.

Bei einer bevorzugten Ausführungsform der Erfindung werden von einer Füllstand-Messeinrichtung eines Kraftstoff-Lagertanks aufgenommene Daten und von einer Kraftstoffvolumen-Messeinrichtung einer mit diesem Kraftstoff-Lagertank verbundenen Zapfsäule aufgenommene Daten bei der Auswertung miteinander verknüpft. Dabei lässt sich bei der Auswertung mittels der von der Kraftstoffvolumen-Messeinrichtung aufgenommenen Daten eine Autokalibrierung der Füllstand-Messeinrichtung vornehmen. Ferner können bei der Auswertung mittels der von der Füllstand-Messeinrichtung aufgenommenen Daten Messabweichungen der Kraftstoffvolumen-Messeinrichtung aufgezeichnet werden.

Bei einer anderen bevorzugten Ausführungsform des erfindungsgemäßen Verfahrens wird die Fördergeschwindigkeit von Kraftstoff an einer Zapfsäule gemessen und eine Abnahme dieser Fördergeschwindigkeit im Laufe der Zeit als Maß für eine Verschlechterung des Zustands von zugeordneten Kraftstofffiltern ausgewertet. Bei herkömmlichen Zapfsäulen wird zwar lediglich das geförderte Kraftstoffvolumen angezeigt, aber im Rahmen eines Gasrückführungs-Überwachungssystems kann die Förderzeit gemessen werden, so dass Daten zur Verfügung stehen, um aus dem geförderten Kraftstoffvolumen die Fördergeschwindigkeit des Kraftstoffs zu bestimmen. Dies ist ein Beispiel dafür, wie im Prinzip isoliert voneinander anfallende Messdaten geschickt miteinander verknüpft und zum effizienten Betrieb einer Tankstelle genutzt werden können. Denn wenn frühzeitig erkannt wird, dass die Fördergeschwindigkeit des Kraftstoffs an der Zapfsäule abnimmt, kann rechtzeitig ein Service für die Kraftstofffilter bestellt werden.

Weitere Beispiele für bevorzugte Ausführungsformen der Erfindung sind die Bestimmung der für die einzelnen Kraftstoffsorten an einer Zapfsäule geförderten Mengen im Laufe der Zeit als Serviceindikator sowie die Möglichkeit, bei der Auswertung von einer Füllstand-Messeinrichtung eines Kraftstoff-Lagertanks aufgenommene Messwerte um den von einem Wasserstands-Sensor in dem Kraftstoff-Lagertank erfassten Wasserstand zu korrigieren.

Im Folgenden wird die Erfindung anhand von Ausführungsbeispielen weiter erläutert.

### A. Beispiele aus dem Bereich der Kraftstofflagerungs- und Kraftstoffumschlags-Daten

(1) In Kraftstoff-Lagertanks einer Tankstelle wird der Füllstand laufend mit Hilfe einer Füllstand-Messeinrichtung gemessen. Derartige Messeinrichtungen weisen z.B einen Schwimmer mit einem Messwertwandler zur elektrischen Signalausgabe oder auch elektronische Messeinrichtungen auf.
   In einem Kraftstoff-Lagertank kann sich auch etwas Wasser befinden, das sich jedoch praktisch nicht mit dem Kraftstoff mischt und sich wegen seiner höheren Dichte unterhalb des Kraftstoffs ansammelt. Mit Hilfe einer separaten Messeinrichtung lässt sich der Wasserpegel ermitteln. Vorzugsweise werden die Messwerte oder Daten für den Kraftstoff-Füllstand und den Wasserpegel entsprechend der Tankgeometrie jeweils in ein Volumen umgewandelt, und von dem aus dem Kraftstoff-Füllstand ermittelten Gesamtvolumen wird das Wasservolumen abgezogen, um einen korrigierten Wert für das im Lagertank befindliche Kraftstoffvolumen zu erhalten.
   Bei einem Ausführungsbeispiel des erfindungsgemäßen Verfahrens werden die Messwerte für den Kraftstoff-Füllstand und den Wasserpegel in vorgegebenen zeitlichen Abständen ausgelesen und zusammen mit dem korrigierten Wert für das Kraftstoffvolumen in einem zentralen Rechner abgespeichert. Als Auswertung können diese Daten in einem Schaubild dargestellt werden.
   Plötzliche Sprünge im Verlauf der Kurven lassen auf Unregelmäßigkeiten schließen. Z.B. deutet ein plötzlicher Anstieg des Wasserpegels auf einen unerwünschten Wassereinbruch in den betreffenden Lagertank hin.
   Ferner weist ein Sinken des Kraftstoff-Füllstands ohne erkennbaren Grund auf ein Leck hin. In diesem Fall müssen bei der Auswertung die Entnahmen von Kraftstoff aus dem Kraftstoff-Lagertank bei den einzelnen Betankungsvorgängen berücksichtigt werden, wobei die von den Kraftstoffvolumen-Messeinrichtungen der mit dem Kraftstoff-Lagertank verbundenen Zapfsäulen ausgegebenen Daten verwendet werden.
(2) In einem weiteren Ausführungsbeispiel für das erfindungsgemäße Verfahren werden zur Auswertung die Messwerte für den Kraftstoff-Füllstand in einem gegebenen Kraftstoff-Lagertank mit den Kraftstoffvolumen-Daten der einzelnen Betankungsvorgänge (sinkender Füllstand) und den Angaben auf den Betankungspapieren für eine Betankung des Lagertanks (steigender Füllstand) verglichen. Diskrepanzen geben einen Hinweis auf Fehler oder Unregelmäßigkeiten.
(3) Um aus dem als lineare Größe gemessenen Kraftstoff-Füllstand auf das Volumen an Kraftstoff in einem Kraftstoff-Lagertank zu schließen, muss die Geometrie des Kraftstoff-Lagertanks genau bekannt sein. Eine entsprechende Kalibrationskurve lässt sich dann rechnerisch ermitteln. Die Kalibration hängt aber z.B. auch kritisch von der Schräglage des Kraftstoff-Lagertanks ab, d.h. von den unvermeidlichen Toleranzen, die sich beim Einbau des Kraftstoff-Lagertanks ergeben.
   Ein Ausführungsbeispiel des erfindungsgemäßen Verfahrens ermöglicht eine Autokalibration der Füllstandanzeige in einem Kraftstoff-Lagertank. Dazu werden die von der Füllstand-Messeinrichtung des Kraftstoff-Lagertanks aufgenommenen Daten protokolliert und zu den bei den einzelnen Betankungsvorgängen entnommenen Kraftstoffvolumen-Daten in Beziehung gesetzt. Letztere werden von den KraftstoffVolumen-Messeinrichtungen der mit dem Kraftstoff-Lagertank verbundenen Zapfsäulen aufgenommen und sind sehr genau, so dass sich eine individuelle Korrektur der rechnerischen Kalibrationskurve des Kraftstoff-Lagertanks vornehmen lässt.
(4) Umgekehrt kann man aber in einem weiteren Ausführungsbeispiel für das erfindungsgemäße Verfahren auch den Füllstand in einem Kraftstoff-Lagertank als Referenz benutzen, um die Kraftstoffvolumen-Messeinrichtungen der an den Lagertank angeschlossenen Zapfsäulen zu überprüfen. Letztere sind in der Regel als Kolbenzähler ausgeführt, bei denen sich im Laufe der Zeit infolge von Reibung falsche Messwerte ergeben. Diese Möglichkeit zur Überprüfung besteht deshalb, weil man annehmen kann, dass die Kalibration des Kraftstoff-Lagertanks in einem engen Füllstand-Änderungsbereich stimmt. Daher kann man eine auf einen einzelnen Betankungsvorgang zurückzuführende Änderung des Füllstands in dem Kraftstoff-Lagertank direkt mit den von dem betreffenden Kolbenzähler ausgegebenen Kraftstoffvolumen-Daten vergleichen.
   Bei der unter (3) erläuterten Autokalibration ändert sich der Füllstand in dem Kraftstoff-Lagertank über einen weiten Bereich, und es findet ein Vergleich mit Kraftstoffvolumen-Daten vieler einzelner Betankungsvorgänge statt, wobei verschiedene Kolbenzähler zum Einsatz kommen, so dass sich etwaige Messfehler weitgehend ausmitteln. Daher ermöglicht das erfindungsgemäße Verfahren sowohl das Ausführungsbeispiel (3) als auch das Ausführungsbeispiel (4).
(5) In einem weiteren Ausführungsbeispiel für das erfindungsgemäße Verfahren wird für jede Kraftstoffsorte einer Zapfsäule die geförderte Menge anhand der von den Kraftstoffvolumen-Messeinrichtungen (z.B. Kolbenzähler) ausgegebenen Daten als Funktion der Zeit bestimmt, protokolliert und z.B. als Schaubild dargestellt. Dies liefert Hinweise auf das Verhalten der Kunden bei der Auswahl von Zapfsäulen und ermöglicht gegebenenfalls durch eine Änderung der Zuordnung der einzelnen Kraftstoffsorten zu den verschiedenen Zapfsäulen eine Optimierung des Betriebs der Tankstelle. Weiterhin ist z.B. eine Abnahme der an der Zapfsäule getankten Kraftstoffmengen ein Serviceindikator, der auf eine Verschlechterung des Zustands der Zapfsäule und erforderliche Wartungsarbeiten schließen lässt.
(6) Da Tankfahrzeuge mehrere Kammern besitzen, können sie mehrere Kraftstoffsorten aufnehmen. Um zu gewährleisten, dass über einen mit einer der Kammern verbundenen Abgabeschlauch die richtige Kraftstoffsorte in einen zu betankenden Lagertank einer Tankstelle eingeführt wird, wird mit Hilfe eines Transponders überprüft, ob der Abgabeschlauch an einen Lagertank mit der richtigen Kraftstoffsorte angeschlossen ist. Dabei wird die Kodierung am Einlass des Lagertanks ausgelesen.

In einem Ausführungsbeispiel des erfindungsgemäßen Verfahrens werden diese Kennungsdaten aufgezeichnet und gespeichert, um den reibungslosen Ablauf der Füllungen der Lagertanks zu dokumentieren.

### B. Beispiele aus dem Bereich der Umwelt-Daten

(1) Einer Zapfsäule sind Kraftstofffilter zugeordnet, durch die während der Betankung eines Kraftfahrzeugs die ausgewählte Kraftstoffsorte strömt. Im Laufe der Zeit verschmutzen diese Filter, und die Fördergeschwindigkeit des Kraftstoffs sinkt. Um diesem Problem zu begegnen, werden die Kraftstofffilter herkömmlicherweise in vorgegebenen Intervallen gewartet oder ausgetauscht.
   Bei einer Regelwartung kann sich der Filter jedoch noch in einem akzeptablen Zustand befinden, oder er ist bereits so stark verschmutzt, dass es zu einer deutlichen Reduzierung der Fördergeschwindigkeit des Kraftstoffs gekommen ist. Der letztere Fall ist nicht kundenfreundlich und führt zu einer Verminderung des Verkaufsergebnisses an der Zapfsäule.
   In einem Ausführungsbeispiel des erfindungsgemäßen Verfahrens wird die Fördergeschwindigkeit von Kraftstoff an der Zapfsäule gemessen, und die Daten werden gesammelt und protokolliert. Bei der Auswertung zeigt eine Abnahme dieser Fördergeschwindigkeit im Laufe der Zeit, dass sich der Zustand der zugeordneten Kraftstofffilter verschlechtert hat. Wenn die Fördergeschwindigkeit eine vorgegebene Grenze unterschritten hat, besteht ein Anlass, die Kraftstofffilter zu warten. Ein entsprechendes Signal an den Servicedienstleister kann im Rahmen der Auswertung automatisch ausgelöst werden.
   Herkömmliche Zapfsäulen messen die Fördergeschwindigkeit des Kraftstoffs nicht, da es bei der Betankung eines Kraftfahrzeugs nur auf das geförderte Kraftstoffvolumen ankommt. Wenn die Zapfsäule mit einem Gasrückführungs-Überwachungssystem ausgerüstet ist, werden jedoch Zeitimpulse erzeugt, um einen Vergleich des pro Zeiteinheit geförderten Kraftstoffvolumens mit dem von der Gasrückführung aus dem Tank des Kraftfahrzeugs pro Zeiteinheit abgesaugten Gasvolumen zu ermöglichen. Diese Zeitimpulse können gezählt werden, um so die Förderzeit des Kraftstoffs zu bestimmen. Aus dem Quotienten des geförderten Kraftstoffvolumens und der Förderzeit ergibt sich die Fördergeschwindigkeit des Kraftstoffs.
(2) In einem weiteren Ausführungsbeispiel für das erfindungsgemäße Verfahren werden alle Gasrückführungsereignisse registriert. Daraus lassen sich Serviceinformationen ableiten und Fehlerdiagnosen im Gasrückführungssytem stellen.
   Z.B. sind Überwachungssysteme von Gasrückführungssystemen häufig mit einem thermischen Durchflusszähler ausgerüstet, bei dem ein beheizter Widerstand von dem rückgeführten Kraftstoffgas gekühlt wird. Dabei ist die Temperatur des Widerstands oder die Heizleistung ein Maß für den Gasdurchfluss. In diesem Fall können als Daten die Temperatur und/oder die Heizleistung des Widerstands als Funktion der Zeit aufgezeichnet werden. Durch Leckagen oder Problemen an den Zapfventilen kann es vorkommen, dass flüssiger Kraftstoff in die Gasrückführungsleitung gelangt. Wenn solcher Kraftstoff auf den Heizwiderstand trifft, wird davon wesentlich besser Wärme abgeführt, so dass die Temperatur des Heizwiderstands schlagartig sinkt. Wenn solche Ereignisse registriert werden, sollte ein Servicedienstleister benachrichtigt werden.
(3) Es gibt Überwachungssysteme für die Gasrückführung, in denen z.B. mit Hilfe einer Wärmeleitfähigkeits-Messzelle die Konzentration von Kohlenwasserstoffen im rückgeführten Gas gemessen wird, siehe DE 199 13 968 A1. Durch Protokollierung der in der Wärmeleitfähigkeits-Messzelle (die ähnlich arbeitet wie der unter B(2) erläuterte thermische Durchflussmesser) erzeugten Messdaten lassen sich plötzliche Konzentrationsschwankungen erkennen, die insbesondere auf Lufteinbrüche zurückzuführen sind. Derartige Nebenluftereignisse sind unerwünscht und können zur Benachrichtigung eines Servicedienstleisters verwendet werden.
   In einem ähnlichen Ausführungsbeispiel werden bei der Auswertung der Konzentrationsdaten Betankungsvorgänge erfasst, bei denen überhaupt kein Kohlenwasserstoffgas zurückgeführt wird. Dies ist bei sogenannten URVR-Fahrzeugen der Fall, die an ihrem Kraftstofftank einen Filter, z.B. mit Aktivkohle, enthalten, mit dessen Hilfe Kohlenwasserstoffgas zurückgehalten werden, oder bei Motorrädern oder Kanistern, bei denen wegen ihres großen Tankstutzens vom Gasrückführungssystem Luft angesaugt wird. Bei der Auswertung lässt sich die Häufigkeit derartiger Betankungsvorgänge erkennen.
(4) Ein Lüftungsmast-Überwachungssystem für Tankstellen ist z.B. in DE 10 2004 009 643 A1 beschrieben. Mit Hilfe dieses Systems können der Durchfluss und die Richtung des durch einen Lüftungsmast in den oder aus dem zugeordneten Lagertank strömenden Gases gemessen werden. Im Idealfall treten am Lüftungsmast keine Strömungsvorgänge auf.
   In einem Ausführungsbeispiel der Erfindung werden die Strömungsvorgänge am Lüftungsmast anhand der erläuterten Messdaten aufgezeichnet und im Hinblick auf Fehlvorgänge ausgewertet.
(5) In einem weiteren Ausführungsbeispiel für das erfindungsgemäße Verfahren wird mit Hilfe eines oder mehrerer Drucksensoren der Druck im Gasraum über dem Kraftstoff in einem Kraftstoff-Lagertank gemessen, insbesondere für Vergaserkraftstoffe. Zum Vergleich kann auch der Außendruck (Luftdruck) gemessen werden, und die Druckwerte können mit den Temperaturen innerhalb oder außerhalb des Lagertanks korreliert werden. In diesen Fällen werden die Daten aufgenommen und als Funktion der Zeit protokolliert.
   Ferner können der Temperaturverlauf und der Druckverlauf in einem Lagertank mit den von der Überwachung eines Gasrückführunssystems bestimmten Gasrückführungsraten verglichen werden, um z.B. zu überprüfen, ob sich ein Druck aufbaut, wenn die Rückführungsrate zu hoch ist. Weiterhin lassen sich diese Daten mit den Daten für die am zugeordneten Lüftungsmast auftretenden Strömungsvorgänge vergleichen. Auch hier erfolgt eine Aufzeichnung als Funktion der Zeit, um Auffälligkeiten nachgehen zu können.
(6) In einem weiteren Ausführungsbeispiel für das erfindungsgemäße Verfahren wird das Ansprechen der Messsonden an einem Ölabscheider aufgezeichnet, um eine Fehlerhistorie zu gewinnen. So kann ein Alarm ausgelöst werden, wenn an dem Ölabscheider kein Wasser mehr abfließt, also zuviel Öl vorhanden ist.
(7) Wie schon unter A(1) erläutert, können durch Überwachung des Füllstands in einem Kraftstoff-Lagertank Rückschlüsse auf mögliche Leckagen gezogen werden.
   Bei doppelwandigen Behältern wird z.B. der Druck im Zwischenraum über Drucksensoren gemessen. Wenn die von derartigen Drucksensoren ausgegebenen Messwerte als Daten über die Zeit gesammelt werden, lassen sich im Fehlerfall z.B. anhand des Druckverlaufs Rückschlüsse ziehen, die hilfreich sein können.
(8) In ähnlicher Weise wie ein Lagertank werden auch die von dem Lagertank zu den Zapfsäulen führenden Leitungen mit Hilfe von Sonden überwacht. In einem Ausführungsbeispiel der Erfindung werden die von derartigen Sensoren ausgegebenen Signale oder Messdaten aufgezeichnet und protokolliert, um in einem Störfall (insbesondere bei Lecks) gegebenenfalls Rückschlüsse daraus ziehen zu können.
(9) Kraftstoff-Lagertanks sind mit Abfüllsicherungen versehen, um beim Befüllen eines Lagertanks einen zu hohen Füllstand zu vermeiden. Eine solche Abfüllsicherung springt bei einem Bedienungsfehler an, also insbesondere, wenn ein zu höher Füllstand erreicht wird. In einem Ausführungsbeispiel der Erfindung wird der Signalverlauf einer Abfüllsicherung als Funktion der Zeit aufgezeichnet. So lassen sich Störungen, ein Ansprechen der Abfüllsicherung oder Manipulationen zum Umgehen der Abfüllsicherung protokollieren.
(10) Bei den meisten Tankstellen wird der Kraftstoff mit Hilfe einer Kraftstoffpumpe, die sich im Bereich einer Zapfsäule befindet, aus dem Lagertank abgesaugt und zu einem zu betankenden Kraftfahrzeug gefördert. Es gibt aber auch Systeme, bei denen am Domschacht des Kraftstoff-Lagertanks eine Druckpumpe angeordnet ist, um den Kraftstoff über einen Heber aus dem Lagertank zu drücken. In solchen Systemen kann sich bei Defekten Kraftstoff im Bereich des Domschachts ansammeln, was von einem Sensor detektiert wird. In einem Ausführungsbeispiel der Erfindung wird die Alarmhistorie derartiger Sensoren aufgezeichnet.

## Patentansprüche

1. Verfahren zum Überwachen von Vorgängen auf einer Tankstelle, **dadurch gekennzeichnet, dass** mittels einer Anzahl von Messeinrichtungen Daten aufgenommen werden und dass die Daten gesammelt und in ihrem zeitlichen Verlauf ausgewertet werden.

2. Verfahren nach Anspruch 1, **dadurch gekennzeichnet, dass** zumindest ein Teil der Messeinrichtungen mit einem zentralen Rechner vernetzt ist und dass zumindest ein Teil der Auswertungen in dem zentralen Rechner, vorzugsweise einem Kassenrechner und/oder einem Backoffice-Rechner der Tankstelle, durchgeführt wird.

3. Verfahren nach Anspruch 1 oder 2, **dadurch gekennzeichnet, dass** die Daten Kraftstofflagerungs-Daten, Kraftstoffumschlags-Daten und/oder Umwelt-Daten aufweisen.

4. Verfahren nach einem der Ansprüche 1 bis 3, **dadurch gekennzeichnet, dass** Daten bei der Auswertung dargestellt werden.

5. Verfahren nach Anspruch 4, **dadurch gekennzeichnet, dass** eine Fehlermeldung erzeugt wird, wenn bei der Auswertung dargestellte Daten außerhalb eines vorgegebenen Bereichs liegen.

6. Verfahren nach einem der Ansprüche 1 bis 5, **dadurch gekennzeichnet, dass** Daten bei der Auswertung miteinander verknüpft werden.

7. Verfahren nach einem der Ansprüche 1 bis 6, **dadurch gekennzeichnet, dass** mindestens eine der Messeinrichtungen aus der folgenden Gruppe ausgewählt ist: Kraftstoff-Lagertanks zugeordnete Messeinrichtungen, Füllstand-Messeinrichtungen, Abfüllsicherungs-Sensoren, Wasserstands-Sensoren, Drucksensoren, Domschacht-Sensoren, Kraftstoffart-Sensoren, Leck-Sensoren, Kraftstoffleitungs-Sensoren; Lüftungsmasten zugeordnete Messeinrichtungen, Strömungsvorgänge an einem Lüftungsmast erfassende Messeinrichtungen; Zapfsäulen zugeordnete Messeinrichtungen, Kraftstoffvolumen-Messeinrichtungen, Gasdurchfluss-Messeinrichtungen, Gaskonzentrations-Messeinrichtungen; Ölabscheider-Sensoren.

8. Verfahren nach einem der Ansprüche 1 bis 7, **dadurch gekennzeichnet, dass** von einer Füllstand-Messeinrichtung eines Kraftstoff-Lagertanks aufgenommene Daten und von einer Kraftstoffvolumen-Messeinrichtung einer mit diesem Kraftstoff-Lagertank verbundenen Zapfsäule aufgenommene Daten bei der Auswertung miteinander verknüpft werden.

9. Verfahren nach Anspruch 8, **dadurch gekennzeichnet, dass** bei der Auswertung mittels der von der Kraftstoffvolumen-Messeinrichtung aufgenommenen Daten eine Autokalibrierung der Füllstand-Messeinrichtung vorgenommen wird.

10. Verfahren nach Anspruch 8, **dadurch gekennzeichnet, dass** bei der Auswertung mittels der von der Füllstand-Messeinrichtung aufgenommenen Daten Messabweichungen der Kraftstoffvolumen-Messeinrichtung aufgezeichnet werden.

11. Verfahren nach einem der Ansprüche 1 bis 7, **dadurch gekennzeichnet, dass** die Fördergeschwindigkeit von Kraftstoff an einer Zapfsäule gemessen wird und eine Abnahme dieser Fördergeschwindigkeit im Laufe der Zeit als Maß für eine Verschlechterung des Zustands von zugeordneten Kraftstofffiltern ausgewertet wird.

12. Verfahren nach Anspruch 11, **dadurch gekennzeichnet, dass** die Fördergeschwindigkeit des Kraftstoffs aus dem geförderten Kraftstoffvolumen und der im Rahmen eines Gasrückführungs-Überwachungssystems gemessenen Förderzeit des Kraftstoffs bestimmt wird.

13. Verfahren nach einem der Ansprüche 1 bis 7, **dadurch gekennzeichnet, dass** für jede Kraftstoffsorte einer Zapfsäule die geförderte Menge als Funktion der Zeit bestimmt und als Serviceindikator ausgewertet wird.

14. Verfahren nach einem der Ansprüche 1 bis 7, **dadurch gekennzeichnet, dass** bei der Auswertung von einer Füllstand-Messeinrichtung eines Kraftstoff-Lagertanks aufgenommene Messwerte um den von einem Wasserstands-Sensor in dem Kraftstoff-Lagertank erfassten Wasserstand korrigiert werden.

15. Vorrichtung zur Durchführung eines Verfahrens nach einem der Ansprüche 1 bis 14.
